# EUROPÄISCHE PATENTANMELDUNG

(11) **EP 2 957 898 A1**
(43) Veröffentlichungstag der Anmeldung: **23.12.2015**
(21) Anmeldenummer: 14172738.8
(22) Anmeldetag: 17.06.2014
(51) Int. Cl.: G01N 21/53, G01N 21/51

(54) **Streulichtmesssystem mit einer Küvette und zwei Blenden, wobei das am Eingangs- und am Ausgangsfenster der Küvette erzeugte Streulicht auf je eine der beiden Blenden fokussiert wird**

(71) Anmelder: Siemens Healthcare Diagnostics Products GmbH, 35041 Marburg (DE)
(72) Erfinder: Die Erfindernennung liegt noch nicht vor
(74) Vertreter: Maier, Daniel Oliver

(57) **Zusammenfassung**

Die Erfindung betrifft ein Streulichtmesssystem mit einer Lichtquelle (19) zur Erzeugung eines Strahlenbündels (16), wobei durch einen Photodetektor (24) Streulicht (29) aus einer Messzelle (13) registriert werden soll. Erfindungsgemäß ist vorgesehen, dass im Strahlengang Zentralblenden (32) vorgesehen sind, die genau im Fokuspunkt von das Messergebnis verfälschendem Streulicht angeordnet sind, welches an einer Eintrittsfläche (20) und an einer Austrittsfläche (21) für das Strahlenbündel (16) der Messzelle (13) beispielsweise durch Kratzer in der Oberfläche der Messzelle entstehen kann. Hierdurch wird vorteilhaft erreicht, dass dieses ungewünschte Streulicht (30) das Messergebnis nicht verfälscht.

## Beschreibung

Die Erfindung betrifft ein Streulichtmesssystem mit einer Lichtquelle zur Erzeugung eines Strahlenbündels, mindestens einer Aufnahmevorrichtung für eine Messzelle und einem Photodetektor für von der Messzelle ausgehendem Streulicht. Im Strahlengang hinter der Aufnahmevorrichtung (also genauer hinter dem Bauraum der Aufnahmevorrichtung für die Messzelle und nach Einbau oder Einsetzen einer Messzelle auch hinter der Messzelle) ist eine Sammeloptik vorgesehen. Diese dient vorrangig der Sammlung des beispielsweise im Rahmen einer nephelometrischen Untersuchung eines Analyts entstandenen Streulichts. Dieses wird mit dem Photodetektor nachgewiesen. Im Strahlengang hinter der Sammeloptik ist weiterhin eine Zentralblende angeordnet. Diese dient zur Ausblendung unerwünschter Lichtanteile, die nicht auf dem Photodetektor abgebildet werden sollen.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z. B. Transferarme mit Greiffunktion, Transportbänder oder drehbare Transporträder, sowie zum Transfer von Flüssigkeiten, wie z. B. Pipettiervorrichtungen. Auch ist es, wie in der DE 10 2009 043 524 A1 beschrieben, möglich, die Messeinrichtung des Analysegerätes beweglich auszuführen, während die Messzellen in ihren Aufnahmevorrichtungen unbeweglich bleiben. Geeignete Geräte umfassen eine Steuereinheit, die mittels entsprechender Software dazu in der Lage ist, die Arbeitsschritte für die gewünschten Analysen weitgehend selbstständig zu planen und abzuarbeiten.

Als Aufnahmevorrichtung im Zusammenhang dieser Erfindung soll eine Einrichtung verstanden werden, die einerseits eine Fixierung der Messzelle erlaubt und andererseits den für die Messzelle erforderlichen Bauraum einschließt. Durch diesen Bauraum, der als Teil der Aufnahmevorrichtung zu verstehen ist, verläuft auch das Strahlenbündel des Messlichtes. Die Messzelle kann auswechselbar oder bleibend in der Aufnahmevorrichtung fixiert sein. Eine bleibende Fixierung ermöglicht auch eine Integration der Messzelle in das Analysegerät (Durchflussmesszelle).

Viele der in derartigen Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen oder Teilchen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Streulichtmesssystem ausgestattet sein. Mittels des Streulichtmesssystems lässt sich die Konzentration feinverteilter, kolloidaler Teilchen in Flüssigkeiten oder Gasen quantitativ bestimmen: Wird eine Suspension kleiner Partikel in einen Lichtstrahl verbracht, so wird ein Teil des eingetretenen Lichtes des Strahlenbündels des Lichtstrahls absorbiert, ein anderer Teil, auch als Primärstrahl bezeichnet, verlässt die Suspension ungestreut und wieder ein anderer Teil wird seitlich zum eintretenden Strahl gestreut. Bei der Nephelometrie wird dieses seitlich austretende Streulicht gemessen. Als Strahlenbündel soll im Rahmen dieser Anmeldung auch das Licht eines Laserstahls verstanden werden.

Die Nephelometrie wird vor allem für den quantitativen oder qualitativen Nachweis von Analyten, beispielsweise Proteinen, eingesetzt, die sich bevorzugt mittels einer spezifische Bindungsreaktion zwischen zwei spezifischen Bindungspartnern, z.B. mittels Antigen-Antikörper-Bindung, nachweisen lassen. Bei einem quantitativen Nachweis wird die Menge, die Konzentration oder die Aktivität des Analyten in der Probe gemessen. Von dem Begriff des quantitativen Nachweises sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Ein Nephelometriesystem umfasst, wie in der DE 198 49 597 A1 beschrieben, üblicherweise mindestens ein Mittel zur Erzeugung eines Strahlenbündels, welches eine Lichtquelle umfasst, und mindestens einen Photodetektor sowie mindestens eine Aufnahmevorrichtung für eine Messzelle. In dieser Bauweise können Lichtquelle, Aufnahmevorrichtung und Photodetektor derart angeordnet sein, dass der Photodetektor das gestreute Licht unter Winkeln oder Winkelbereichen um die Ausbreitungsrichtung des von der Lichtquelle ausgesandten Lichtstrahls erfasst, in denen die Intensität des Streulichts relativ hoch ist. Den Photodetektor erreicht in dieser Geometrie jedoch nicht nur das Streulicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine möglichst vollständige Ausblendung des Primärstrahls erforderlich. Hierfür wird eine optische Zentralblende eingesetzt. Diese wird mittels dünner Stege im Strahlengang gehalten und hinsichtlich ihrer Größe und Form so angepasst, dass sie einen möglichst großen Teil des Primärstrahls ausblendet, so dass möglichst ausschließlich Streulicht auf den Detektor trifft. Gemäß der DE 36 08 552 A1 können weitere Blenden eingesetzt werden, um das Streulicht noch besser vom Licht des Primärstahls zu trennen.

Eine wichtige Rolle zur weiteren Optimierung des Messergebnisses und Erhöhung des Signal-Rausch-Abstandes spielt die Größe des Streuvolumens der Probe, aus dem Streulicht auf den Detektor geleitet werden kann. Eine Vergrößerung des Streuvolumens führt dabei theoretisch in der Regel zu einer Verbesserung des Messergebnisses durch eine Erhöhung des Signal-Rausch-Abstandes. Jedoch treten dabei in der Praxis durch Beleuchtung von Randbereichen der Messzelle häufig störende Effekte wie z.B. Reflektionen auf, die besonders bei Messzellen mit rundem oder ovalem Querschnitt besonders ausgeprägt sein können und zu einer erheblichen Störung des Messsignals führen. Da das benötigte Volumen der Probe möglichst gering sein sollte, da häufig nur geringe Materialmengen zur Verfügung stehen, ist es nicht möglich, die störenden Effekte durch z.B. eine Vergrößerung des Querschnitts der Messzelle zu erreichen.

Die Aufgabe der Erfindung besteht darin, ein Streulichtmesssystem anzugeben, mit dem optische Messungen durchgeführt werden können, die möglichst wenig durch nicht zu messendes Licht verfälscht werden. Insbesondere soll, wenn dieses Streulichtmesssystem als Nephelometer verwendet wird, möglichst nur das Streulicht der Analyt-abhängigen Partikelaggegation auf den Photodetektor fallen, während andere Lichtanteile möglichst weitgehend ausgeblendet werden sollen.

Diese Aufgabe wird mit dem eingangs angegebenen Streulichtmesssystem erfindungsgemäß dadurch gelöst, dass die Zentralblende im Strahlengang an der Stelle angeordnet ist, wo das von der Eintrittsfläche oder von der Austrittsfläche einer in der Aufnahmevorrichtung eingesetzten Messzelle ausgehende und von der Sammeloptik erfasste Streulicht einen Fokuspunkt hat. In der praktischen Anwendung von Streulichtmesssystemen hat sich nämlich gezeigt, dass der Anlayt häufig in Messzellen untersucht wird, die für den mehrfachen Gebrauch Verwendung finden. Beispielsweise können dies Küvetten aus Kunststoff sein. Diese werden nach jeweiligem Gebrauch gespült, wobei die Handhabung der Küvetten sowie der Spülvorgang dazu führen können, dass die Oberfläche des Materials zerkratzt wird oder in anderer Weise seine optischen Eigenschaften ändert. Diese Eigenschaftsänderungen führen dazu, dass das Strahlenbündel des Messlichtes an der Oberfläche der Küvette oder einer anders ausgeführten Messzelle gestreut wird, wobei es hierbei zwei definierte Stellen gibt, an denen dieses Streulicht entsteht, nämlich die Eintrittsstelle des Strahlenbündels in die Oberfläche der Küvette und gegenüberliegend die Austrittsstelle des Strahlenbündels. Das Streulichtmesssystem weist eine Aufnahmevorrichtung auf, in die die Messzelle eingesetzt wird, so dass diese Stellen im Strahlengang des Streulichtmesssystems an einer definierten Stelle liegen. Deswegen ist es vorteilhaft möglich, den Strahlengang von unerwünschten Streulicht soweit vorherzusagen, dass mittels der Sammeloptik eine Fokussierung dieses Streulichts genau auf einen Fokuspunkt möglich ist. In diesem Fokuspunkt kann die Zentralblende angeordnet werden, wobei diese vorteilhaft nur eine geringe Blendenfläche aufweisen muss, um das störende Streulicht auszublenden. Dies hat den Vorteil, dass das Streulicht, was durch die Analyt-abhängige Partikelaggregation entsteht, durch diese Zentralblende nur in geringem Maße aufgefangen wird.

Besonders vorteilhaft ist es, wenn zwei solche Zentralblenden im Strahlengang angeordnet sind, so dass sowohl das Streulicht, das beim Eintritt des Strahlenbündels in die Messzelle hinein als auch beim Austritt des Strahlenbündels aus der Messzelle heraus entsteht, aufgefangen werden kann. Dies wird erreicht, indem die eine der Zentralblenden an der Stelle angeordnet ist, wo das von der Eintrittsfläche (an der Eintrittsstelle) einer in der Aufnahmevorrichtung eingesetzten Messzelle ausgehende und von der Sammeloptik erfasste Streulicht einen Fokuspunkt hat, und die andere der Zentralblenden an der Stelle angeordnet ist, wo das von der Austrittsfläche (an der Austrittstelle) einer in der Aufnahmevorrichtung eingesetzten Messzelle ausgehende und von der Sammeloptik erfasste Streulicht einen Fokuspunkt hat.

Gemäß einer anderen Ausgestaltung der Erfindung ist vorgesehen, dass die Sammeloptik aus einer ersten Teiloptik und einer im Strahlengang dahinter angeordneten zweiten Teiloptik besteht. Die Sammeloptik kann insofern aus mehreren Sammellinsen zusammengesetzt sein. Die Verwendung von mehreren Sammellinsen hat den Vorteil, dass die optische Güte der Sammeloptik auch bei kürzeren zu realisierenden Brennweiten gewährleistet werden kann.

Gemäß einer anderen Ausgestaltung der Erfindung ist vorgesehen, dass das von der Eintrittsfläche einer in der Aufnahmevorrichtung eingesetzten Messzelle ausgehende und von der Sammeloptik erfasste Streulicht hinter einer weiteren Sammeloptik einen Fokuspunkt hat, wo die eine der Zentralblenden angeordnet ist und das von der Austrittsfläche einer in der Aufnahmevorrichtung eingesetzten Messzelle ausgehende und von der vorstehend schon erwähnten Sammeloptik erfasste Streulicht hinter dieser Sammeloptik einen Fokuspunkt hat, wo die andere der Zentralblenden angeordnet ist. Hierbei entsteht vorteilhaft ein größerer Gestaltungsspielraum für die Auslegung des Strahlengangs, wobei die Zentralblenden an Stellen im Strahlengang angeordnet werden können, wo sie möglichst wenig des auf Grund der Analyt-abhängigen Partikelaggregation entstandenen Streulichts auffangen. Hierdurch kann die Güte des Messergebnisses verbessert werden.

Neben dem Streulicht, das an der Küvettenoberfläche entsteht und somit das Messergebnis verfälschen würde, muss selbstverständlich auch das Licht des ungestreuten Strahlenbündels, also der Primärstrahl ausgeblendet werden. Dies kann durch die erste der beiden genannten Zentralblenden im Strahlengang gewährleistet werden, wenn das Strahlenbündel durch einen Parallelstrahl, z. B. einen Laserstrahl, gebildet ist. Eine andere Möglichkeit besteht darin, dass an einer der beiden genannten Zentralblenden ein Fokuspunkt des verwendeten Strahlenbündels liegt, so dass dieser mit der zur Verfügung stehenden Blendenfläche vollständig absorbiert wird. Ist dies jedoch nicht der Fall, ist es gemäß einer besonderen Ausgestaltung der Erfindung sinnvoll, dass in einem Fokuspunkt des ungestreuten Strahlenbündels, also dem Primärstrahl, eine weitere Zentralblende angeordnet ist. Diese dritte Zentralblende kann im Strahlengang unabhängig von den anderen beiden Zentralblenden angeordnet werden, wobei deren Blendenfläche ebenfalls klein ausgeführt werden kann. Die ungewünschte Absorption von an den Analyt-abhängigen Partikelaggregaten gestreuten Streulicht kann somit gering gehalten werden.

Besonders vorteilhaft ist es, wenn in dem Streulichtmesssystem mehrere Aufnahmevorrichtungen auf einem Träger angeordnet sind. Dieser Träger kann beispielsweise eine Scheibe sein, auf der die Aufnahmevorrichtungen auf einem Kreis angeordnet sind. Allerdings ist auch eine lineare Anordnung möglich. Diese kann beispielsweise auf einem Förderband erfolgen. Das Förderband kann dann die mit den Messzellen bestückten Aufnahmevorrichtungen durch das Streulichtmesssystem führen. Bei der Ausführung des Trägers als Scheibe kann diese drehbar angeordnet sein, damit durch Drehung der Scheibe die Messzellen nacheinander durch das Streulichtmesssystem geführt werden können.

Besonders vorteilhaft ist es aber, wenn der Träger ortsfest gelagert ist. Dies hat den Vorteil, dass die Bestückung der Aufnahmevorrichtungen beispielsweise mittels eines Roboterarms einfach erfolgen kann. Dies ist auch möglich, während mit dem Streulichtmesssystem Messungen an Messzellen in anderen Aufnahmevorrichtungen zeitgleich erfolgen. Wenn der Träger ortsfest gelagert ist, müssen die optischen Elemente zur Erzeugung des Strahlenganges in einer Baueinheit zusammengefasst werden, die beweglich ist. Als optische Elemente sind alle die Funktionseinheiten des Streulichtmesssystems zu verstehen, die das Strahlenbündel erzeugen, leiten und das Streulicht registrieren, also die Lichtquelle, der Photodetektor, die erste und die zweite Sammeloptik und die Zentralblende sowie weitere optische Elemente, die im Strahlengang des Strahlenbündels vorgesehen sind. Die Baueinheit kann dann zu den einzelnen Messzellen hin bewegt werden. Da der Strahlengang in der Baueinheit verläuft lässt sich damit die photometrische Untersuchung durchführen. In der Baueinheit ist eine Kavität vorgesehen, in die die Messzelle eingeführt werden kann.

Weitere Einzelheiten der Erfindung lassen sich der Zeichnung entnehmen. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben. Es zeigen
- Figur 1: ein Ausführungsbeispiel des erfindungsgemäßen Streulichtmesssystems schematisch als Schnitt, wobei der Strahlengang des Streulichts am Ausgang des Strahlenbündels aus der Messzelle dargestellt ist und
- Figur 2: das Ausführungsbeispiel gemäß Figur 1 schematisch als Schnitt, wobei das Streulicht des Strahlenbündels am Eingang in die Messzelle dargestellt ist.

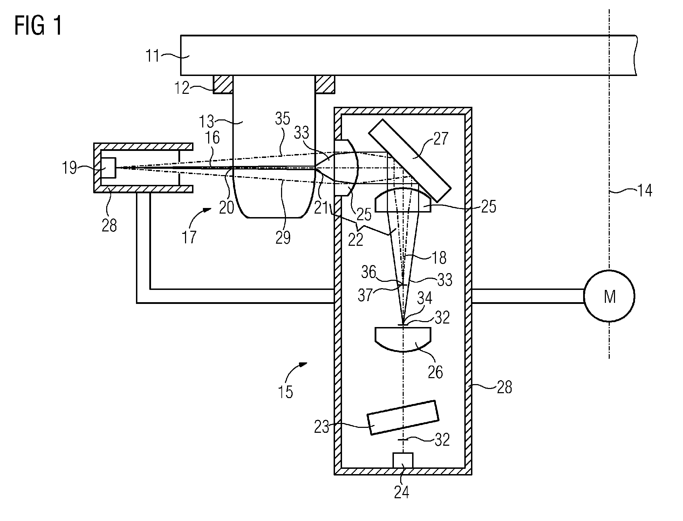

Ein Streulichtmesssystem gemäß Figur 1 weist einen Träger 11 in Form einer runden Scheibe auf, an dem Aufnahmevorrichtungen 12 zur Aufnahme von Messzellen 13 vorgesehen sind. Diese sind kreisringförmig um eine Symmetrieachse 14 angeordnet. Das Streulichtmesssystem weist weiterhin eine Baueinheit 15 auf, in der die optischen Elemente zur Erzeugung eines Strahlengangs 16 zusammengefasst sind. Diese Baueinheit kann mit Hilfe eines Motors M um die Symmetrieachse 14 gedreht werden, wobei der Strahlengang 18 durch die Messzellen 13 geleitet werden kann, von denen in Figur 1 nur eine dargestellt ist. Für die dargestellte Messzelle 13 ist in der Baueinheit 15 daher ein Freiraum 17 vorgesehen, durch den das Strahlenbündel 16 verläuft.

Ein Strahlengang 18 wird in der Baueinheit 15 durch folgende optische Elemente erzeugt. Eine Lichtquelle 19 in Form einer Laserdiode erzeugt das Strahlenbündel 16, welches über eine Eintrittsfläche 20 in die Messzelle 13 eingeleitet, durch ein nicht näher dargestelltes Analyt-haltiges Medium in der Messzelle 13 geleitet und über eine Austrittfläche 21 aus der Messzelle wieder ausgeleitet wird. Das Strahlenbündel 16 und auf dem Weg durch die Messzelle 13 entstandenes Streulicht wird durch eine Sammeloptik 22 und eine weitere Sammeloptik in Form einer Sammellinse 26 geleitet und trifft zumindest zum Teil nach Durchlaufen eines Tageslichtfilters 23 auf einen Photodetektor 24, wo ein Messergebnis erzeugt wird. Die Sammeloptik 22 besteht aus einer ersten und einer zweiten Teiloptik 25. Jede Teiloptik 25 besteht wiederum aus einer Sammellinse, zwischen denen ein Umlenkspiegel 27 angeordnet ist. Dieser dient einer Strahlumlenkung, wodurch der Bauraum der Baueinheit besser genutzt werden kann. Eine Gehäusestruktur 28 kann hierdurch kompakter (mit geringerer Baulänge) ausgeführt sein.

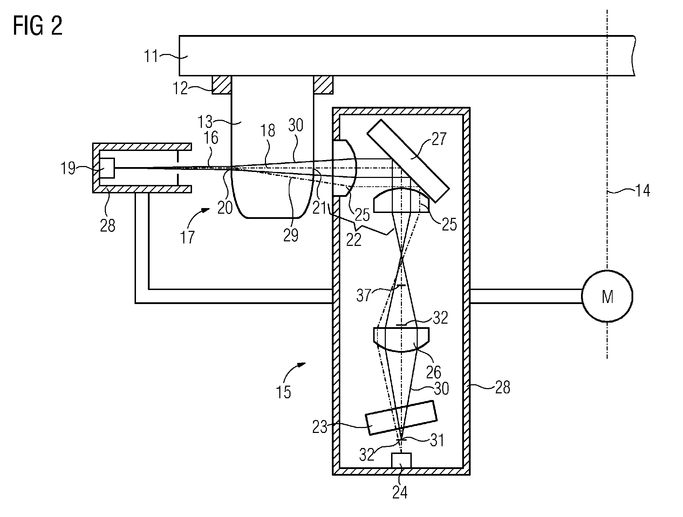

Im Ausführungsbeispiel gemäß Figur 1 und 2 wird als Lichtquelle 19 eine Laserdiode verwendet, die ein parallel ausgerichtetes Strahlenbündel 16 aussendet. In der Messzelle 13 können Analyt-abhängige Partikelaggregate Streulicht 29 erzeugen, wobei in Figur 2 exemplarisch ein Strahl des Streulichts 29 dargestellt ist. Allerdings kann an der Eintrittsfläche 20 des Strahlenbündels 16 in die Messzelle 13 ebenfalls Streulicht 30 entstehen, wie Figur 2 zu entnehmen ist. Dies ist in Figur 2 als Strahlenbündel dargestellt, wobei dieses Streulicht das Messergebnis verfälschen würde, wenn es auf den Photodetektor 24 fallen würde. Daher ist in einem durch die Sammeloptik (hinter der zweiten Sammeloptik 26) erzeugten Fokuspunkt 31 des Strahlenbündels des verfälschenden Streulichts eine Zentralblende 32 angeordnet. Diese absorbiert das unerwünschte Streulicht 30, so dass nur das Streulicht 29 aus der Messzelle auf den Photodetektor fallen kann.

Auch an der Austrittsfläche des Strahlenbündels 16 aus der Messzelle 13 kann Streulicht 33 entstehen, wie Figur 1 zu entnehmen ist. Auch dieses wird durch die Sammeloptik 22 gebündelt, so dass ein Fokuspunkt 34 entsteht, in dem eine weitere Zentralblende 32 angeordnet ist. Damit wird auch dieses störende Streulicht absorbiert und kann den Photodetektor 24 nicht erreichen.

Statt einer Laserdiode kann als Lichtquelle 19 auch beispielsweise eine LED verwendet werden, die ein divergentes Strahlenbündel 35 erzeugt (siehe Figur 1). Dieses ist strichpunktiert als Strahlengang dargestellt, wobei deutlich wird, dass dieses Strahlenbündel 35 nach Durchlaufen der Teiloptiken 25 einen Fokuspunkt 36 aufweist. Auch hier kann eine weitere Zentralblende 37 angeordnet werden, damit dieses Licht nicht auf dem Photodetektor 24 abgebildet wird.

### Bezugszeichenliste

- 11: Träger
- 12: Aufnahmevorrichtung
- 13: Messzelle
- 14: Symmetrieachse
- 15: Baueinheit
- 16: Strahlenbündel
- 17: Freiraum
- 18: Strahlengang
- 19: Lichtquelle
- 20: Eintrittsfläche
- 21: Austrittfläche
- 22: Sammeloptik
- 23: Tageslichtfilter
- 24: Photodetektor
- 25: Teiloptik
- 26: Sammellinse
- 27: Umlenkspiegel
- 28: Gehäusestruktur
- 29: Streulicht
- 30: Streulicht
- 31: Fokuspunkt
- 32: Zentralblende
- 33: Streulicht
- 35: Strahlenbündel
- 37: Zentralblende

- M: Motor

## Patentansprüche

1. Streulichtmesssystem mit einer Lichtquelle (19) zur Erzeugung eines Strahlenbündels (16), mindestens einer Aufnahmevorrichtung (12) für eine Messzelle (13) und einem Photodetektor (24) für von der Messzelle ausgehendes Streulicht, wobei
- im Strahlengang hinter der Aufnahmevorrichtung (12) mindestens eine Sammeloptik (22) vorgesehen ist und
- im Strahlengang hinter der Sammeloptik (22) eine Zentralblende (32) angeordnet ist,
**dadurch gekennzeichnet, dass** die Zentralblende (32) im Strahlengang an der Stelle angeordnet ist, wo das von der Eintrittsfläche (20) oder von der Austrittsfläche (21) einer in der Aufnahmevorrichtung (12) eingesetzten Messzelle (13) ausgehende und von der Sammeloptik erfasste Streulicht einen Fokuspunkt hat.

2. Streulichtmesssystem nach Anspruch 1,
**dadurch gekennzeichnet, dass** zwei Zentralblenden (32) im Strahlengang angeordnet sind, wobei
- die eine der Zentralblenden (32) an der Stelle angeordnet ist, wo das von der Eintrittsfläche (20) einer in der Aufnahmevorrichtung (12) eingesetzten Messzelle (13) ausgehende und von der Sammeloptik (22) erfasste Streulicht einen Fokuspunkt hat, und
- die andere der Zentralblenden (32) an der Stelle angeordnet ist, wo das von der Austrittsfläche (21) der in der Aufnahmevorrichtung (12) eingesetzten Messzelle (13) ausgehende und von der Sammeloptik (22) erfasste Streulicht einen Fokuspunkt hat.

3. Streulichtmesssystem nach einem der voranstehenden Ansprüche,
**dadurch gekennzeichnet, dass** die Sammeloptik (22) aus einer ersten und einer im Strahlengang dahinter angeordneten zweiten Teiloptik (25) besteht.

4. Streulichtmesssystem nach Anspruch 3,
**dadurch gekennzeichnet, dass**
- das von der Eintrittsfläche (20) einer in der Aufnahmevorrichtung (12) eingesetzten Messzelle (13) ausgehende und von der Sammeloptik erfasste Streulicht hinter einer weiteren Sammeloptik (26) einen Fokuspunkt hat, wo die eine der Zentralblenden (32) angeordnet ist und
- das von der Austrittsfläche (21) einer in der Aufnahmevorrichtung (12) eingesetzten Messzelle (13) ausgehende und von der Sammeloptik (22) erfasste Streulicht hinter der ersten Teiloptik einen Fokuspunkt hat, wo die andere der Zentralblenden (32) angeordnet ist.

5. Streulichtmesssystem nach einem der voranstehenden Ansprüche,
**dadurch gekennzeichnet, dass** in einem Fokuspunkt des ungestreuten Strahlenbündels (16) eine weitere Zentralblende (37) angeordnet ist.

6. Streulichtmesssystem nach einem der voranstehenden Ansprüche,
**dadurch gekennzeichnet, dass** die Aufnahmevorrichtung (12) für die Aufnahme von Küvetten vorgesehen ist.

7. Streulichtmesssystem nach einem der voranstehenden Ansprüche,
**dadurch gekennzeichnet, dass** mehrere Aufnahmevorrichtungen (12) auf einem Träger (11) angeordnet sind.

8. Streulichtmesssystem nach Anspruch 7,
**dadurch gekennzeichnet, dass** der Strahlengang in einer Baueinheit (15) verläuft, die zu den auf dem Träger (11) befindlichen Aufnahmevorrichtungen (12) hin bewegt werden kann.
